(19) Europäisches Patentamt
European Patent Office
Office européen des brevets

(11)   **EP 1 790 513 B1**

(12)   **EUROPEAN PATENT SPECIFICATION**

(45) Date of publication and mention
of the grant of the patent:
**20.03.2013  Bulletin 2013/12**

(51) Int Cl.:
***B60J 5/04*** *(2006.01)*

(21) Application number: **06123159.3**

(22) Date of filing: **30.10.2006**

(54) **An internal reinforcement structure for a vehicle door panel**

Fahrzeugtürinnenpanelverstärkung

Dispositif de renforcement interne pour une porte d'un véhicule

(84) Designated Contracting States:
**DE GB SE**

(30) Priority: **29.11.2005  US 164566**

(43) Date of publication of application:
**30.05.2007  Bulletin 2007/22**

(73) Proprietor: **Volvo Car Corporation**
**405 31 Göteborg (SE)**

(72) Inventor: **Mattsson, Ingemar**
**375 90, Morrum (SE)**

(74) Representative: **Messulam, Alec Moses**
**Harrison IP**
**1st Floor**
**Box Tree House**
**Northminster Business Park**
**Northfield Lane**
**York, YO26 6QU (GB)**

(56) References cited:
**EP-A- 0 056 849      EP-A- 1 215 065**
**WO-A-00/35696        WO-A-2004/014681**
**DE-A1- 3 217 640     US-A1- 2004 104 593**

## Description

The invention relates to an automotive vehicle door panel construction in which an outer door panel assembly is characterized by enhanced structural stiffness.

A vehicle door construction for contemporary automotive vehicles typically comprises a plurality of structural panels. Window glass channels secure a glass window pane at forward and rearward edges of the window pane while accommodating movement of the window glass between a closed position and an open position. A door outer structure is disposed on one side of the window glass and a door inner structure is disposed on the opposite side. The door outer structure typically includes a belt reinforcement that extends fore and aft from a forward door opening location to a rearward door opening location. The belt reinforcement typically is situated proximate to the outer side of the window glass and the window glass supporting glass channels. The door outer structure includes also an outer panel situated on the outboard side of the belt reinforcement.

The span between the front end and the rear end of the side door outer structure typically has no transverse support for transmitting loads from the belt reinforcement into the stiffer inner door structure on the inside of the window area. The outer door structure span is approximately equal to the width of the vehicle door opening. Because of its relatively long span, the side door outer structure typically is characterized by low stiffness since stiffness is inversely proportional to the length of the span between end supports.

Prior art vehicle door constructions do not permit a practical way to compensate for the low stiffness of the side door outer structure because of a lack of space between the side door outer structure and the window glass support channels.

Because of the low stiffness of the vehicle side door outer structure, which includes the outer panel and the belt reinforcement, access to the interior of the vehicle during burglaries can be accomplished by deflecting the side door outer structure using special tools for forcing the side door outer structure outwardly relative to the inner side door structure. This creates a space that allows an intruder to activate and release a door locking mechanism situated in the interior of the door between the side door inner structure and side door outer structure.

It is an object of this invention to provide an improved automotive door assembly. It is a further objective of the invention to reduce the vulnerability of a contemporary vehicle side door to unlawful entry by reducing the span between belt reinforcement securing means at the forward portion and the rearward portion of the belt reinforcement, thereby increasing the stiffness of the side door outer structure.

According to the present invention the problem posed is solved by the technical features of claim 1. Further developments of the invention are the subject-matter of the dependent claims.

The first connecting bracket may have a first portion secured to the belt reinforcement member at a first location within the projection area of a window glass and a second portion secured to the first window glass supporting channel at a location forward of the first location.

The at least one connecting bracket may include a second connecting bracket mechanically connecting the belt reinforcement member and the inner structural panel assembly within a window glass projection area in proximity to a rearward edge of a window glass in the glass supporting channel.

Advantageously, the connector bracket may be a symmetrical part so that it can be located on both the leading edge of the door opening and the rear edge of the door opening.

The door inner structural panel assembly may comprise a first inner panel and a second inner panel, the second inner panel being disposed between the first inner panel and the glass channels, and at least one connecting bracket is mechanically connected to the second inner panel.

There may be first and second connecting brackets and the first and second connecting brackets may both be mechanically connected to the second inner panel.

The belt reinforcement member may be disposed between the second inner panel and the door outer panel such that the belt reinforcement member and the outer panel form a door outer structural panel assembly.

The mechanical connection of the belt reinforcement member to the inner structural panel assembly may include a releasable fastener and the inner structural panel assembly includes at least one access opening to permit entry of a tool to attach and release the releasable fastener.

This has the advantage of permitting access to the releasable fastener at a later date if the outer panel and belt reinforcement subassembly need to be replaced.

The door inner structural panel assembly may comprise a first inner panel and a second inner panel, the second inner panel being disposed between the first inner panel and the glass channels, the first and second inner panels of the inner structural panel assembly being secured together at respective forward and rearward panel margins, first and second connecting brackets are used to mechanically connect the belt reinforcement member to the second inner panel and the belt reinforcement member extends between the forward and rearward panel margins wherein a span between the forward and rearward margins may be greater than a span between the mechanical connections between the belt reinforcement member and the first and second connecting brackets.

A functional relationship between the span between the mechanical connections and a deflection due to a force applied to the belt reinforcement member may

be expressed as

$\delta = Fl^3[X]EI$, where

$\delta$ = deflection to be minimized,

F = force,

l = length of span between mechanical connections,

E = modulus of elasticity,

I = $2^{nd}$ moment of inertia, and

X = load case factor.

The invention will now be described by way of example with reference to the accompanying drawing of which:-

Figure 1 is an isometric plan view of an automotive vehicle side door;

Figure 2 is a partial plan view of a portion of the door of Figure 1 in proximity to the forward edge of the door opening with the side door outer structure removed;

Figure 3 is a partial plan view of a forward portion of the inner door panel structure;

Figure 4 is a partial plan view of a rear portion of the inner door panel structure;

Figure 5 is a partial cross-sectional view of the door structure seen in Figure 1 as viewed from the plane of section line 5-5 of Figure 1;

Figure 6 is an enlarged cross-sectional view of the front portion of the door structure seen in Figure 5;

Figure 7 is a partial enlarged cross-sectional view of the rearward portion of the view of Figure 5; and

Figure 8 is a detailed schematic illustration of a connector bracket located at a forward location of the door structure as seen in the cross-sectional view of Figure 5.

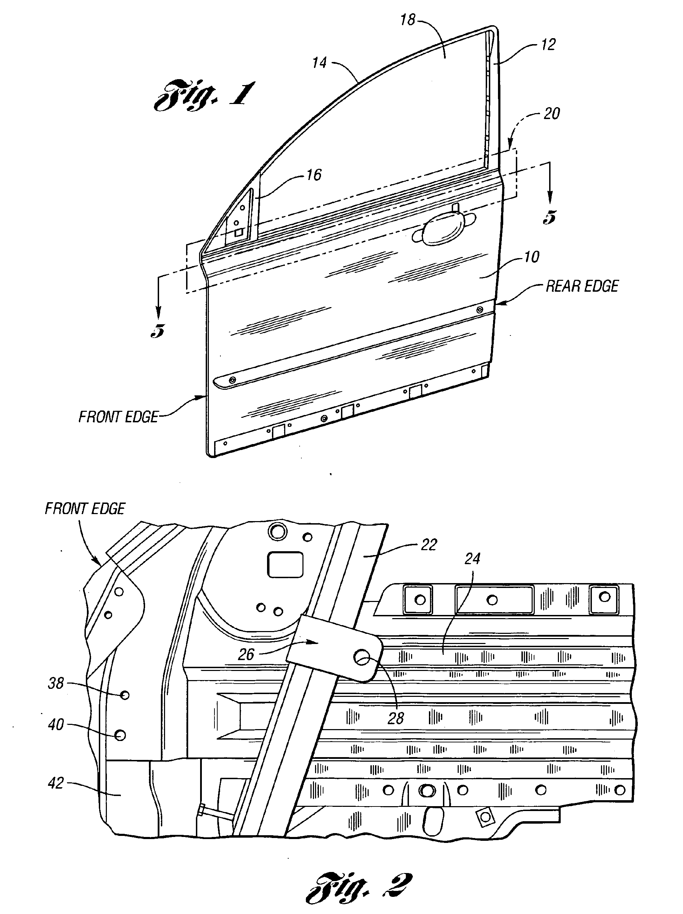

Figure 1 is an isometric plan view of a front left side door outer panel assembly, including an appropriately contoured outer door panel 10, a rear portion 12, an upper portion 14 and a forward portion near front window frame portion 16. The side window glass is indicated at 18.

The complete side door outer structure is not illustrated in Figure 1. The side door inner structure also is lacking. The area of interest, for purposes of the subsequent description of the invention, is indicated in Figure 1 by the area enclosed by dotted lines, as shown at 20.

Figure 2 shows the side door inner structure as viewed from the exterior of the vehicle with the outer side door structure removed. A window glass channel 22 is secured to the outboard surface of a second inner door structural panel 24, which forms a part of the side door inner structure. A structural connection between the glass channel 22 and the panel 24 can be formed by welding, although other fastening techniques could be used, including riveting.

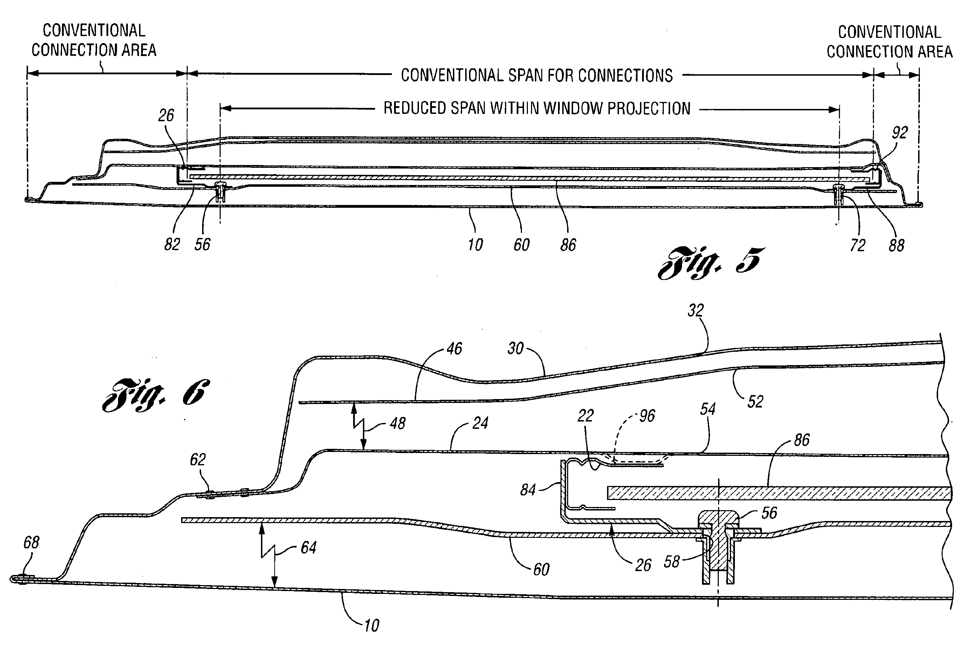

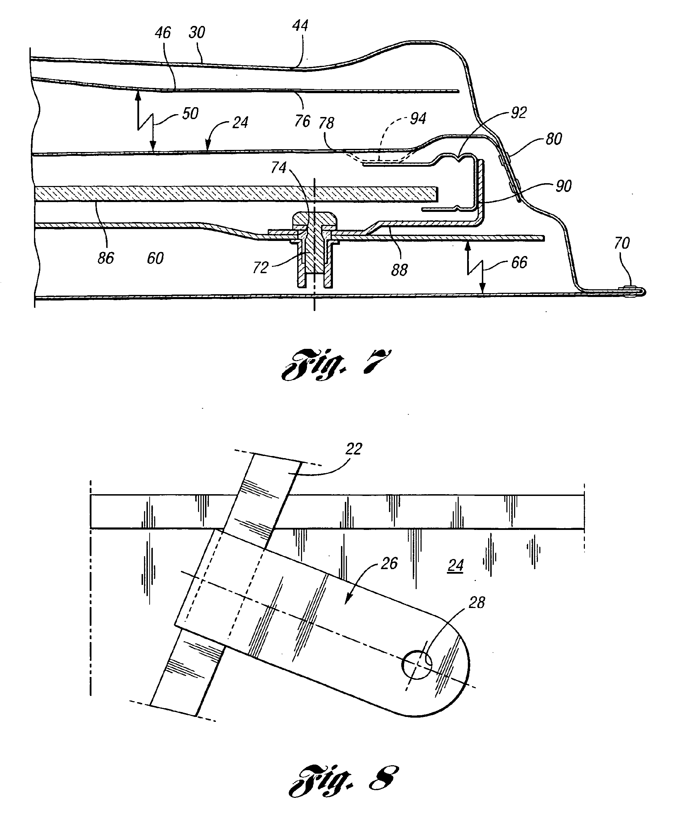

As will be described subsequently with reference to Figures 5 and 6, the glass channel 22 has a U-shaped cross section. It provides a support for the front edge of the window glass 18, as the window glass is raised and lowered between the side door inner structure and the side door outer structure. A connector bracket 26, which will be described more particularly with reference to Figure 6, is shown in Figure 2. The bracket 26 provides a secure mechanical connection between the glass channel 22 and the belt reinforcement, which forms a part of the side door outer structure as will be described with reference to Figures 6 and 7.

Bracket 26 includes an opening 28 for accommodating a fastener that mechanically connects the connector bracket 26 and the glass channel 22 to the side door outer structure.

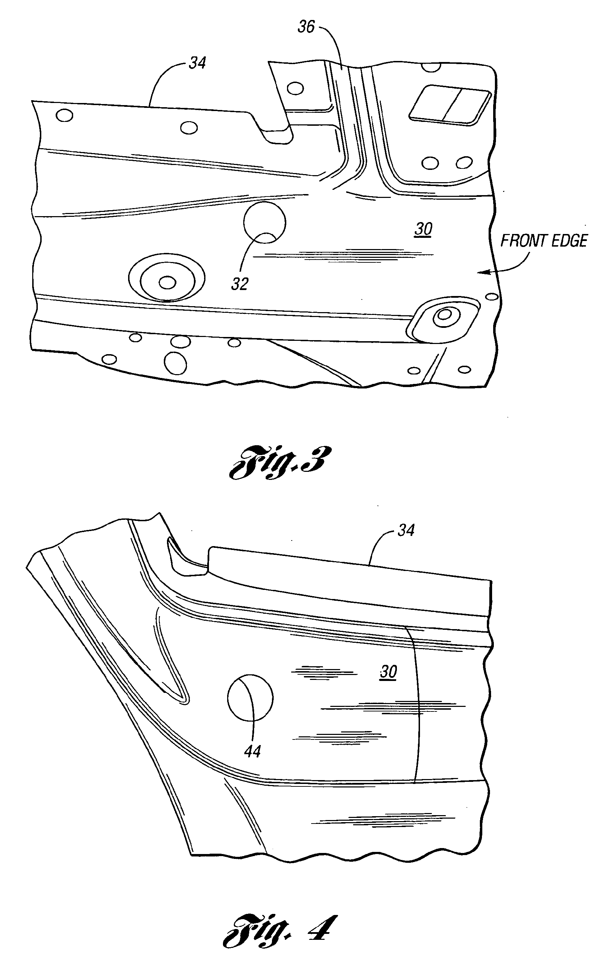

Figure 3 is a partial plan view of the front edge portion of the side door inner structure, which includes an inner panel 30 that may support a trim panel (not shown). Panel 30 is provided with an access opening 32, which is aligned with the opening 28 in the connector bracket 26 seen in Figure 2. The panel 30 is provided with a window glass opening, which has a sill portion 34 and a front edge window glass frame portion 36 which forms a part of the forward window frame 16 seen in Figure 1.

As seen in Figure 2, the panel 24 is secured preferably by spot welds, shown at 38 and 40, to the front edge of a structural door frame 42, which is hinged to the vehicle body structure.

Figure 4 shows the rearward portion of the panel 30 adjacent the rearward edge of the window glass opening. A tool access opening 44 is formed in the rearward portion of the panel 30 to permit tool access to a fastener that will be described with reference to Figure 7. Intermediate or first side door inner structure panel 46, seen in Figure 6, is situated between the inner panel 30 and the second inner structural panel 24 of the side door inner structure. Panel 46 is connected by welding or other fastening techniques to the panel 24, as indicated schematically at 48 in Figure 6 and at 50 in Figure 7.

A tool access opening 52 is formed in the panel 46 and a tool access opening 54 is formed in the panel 24, as indicated in Figure 6. The access openings 32, 52 and 54 are aligned with a fastener, such as a threaded fastener 56.

Fastener 56 is received in an opening 58 formed in reinforcement member 60, which extends longitudinally fore-and-aft in the space between outer panel 10 and panel 24 of the side door inner structure.

The outer panel 10 is welded at its margin to the forward edge region of the inner panel 30, as shown at 62 in Figure 6. Reinforcement member 60 is secured permanently, such as by welding, to the outer panel 10, as schematically illustrated at 64 in Figure 6 and at 66 in Figure 7. The inner panel 30 is secured at its forward margin to the outer panel 10 by welding, as shown at 68 in Figure 6 and at 70 in Figure 7.

The rearward region of the door panels seen in Figure 7 includes a second fastener, such as a threaded fastener 72, received in an opening 74 in the rearward portion of the reinforcement member 60. The threaded fastener 72 is aligned with opening 44 in inner panel 30, with opening 76 at the rearward region of inner panel 46 and with an access opening 78 in the rearward portion of inner panel 24. The rearward portion of panel 24 is secured by welding at its margin to the inner panel 30, as seen at 80.

The reinforcement member 60 extends through the door structure from the forward edge to the rearward edge in the general region of interest, indicated at 20 in Figure 1. Connector bracket 26, which is generally of L-shape, has a leg with an opening 28 through which the threaded fastener 56 extends, as seen in Figure 6. A tool can be inserted through the access openings 32, 52 and 54 from the inner side of the side door inner structure to secure the bracket 26 in place. A second leg of the bracket 26 extends in a generally perpendicular direction with respect to the adjacent leg. It is secured at 84 to a side of the window glass U-shaped channel 22. The U-shaped channel, as mentioned previously, is secured to the panel 24 of the side door inner structure. Therefore, the reinforcement member 60 is firmly secured to the inner door structure to form a robust and stiff door assembly.

The window glass 86 has its forward margin received in the window glass channel 26. During the assembly procedure, however, the glass 86 is not in place. Therefore, the fastener 56 can be accessed to secure the connector bracket 26 to the glass channel 22.

At the rearward edge of the side door inner structure, a second connector bracket of generally L-shape is provided, as shown at 88. It has an opening for receiving a fastener 72, whereby the fastener 72 secures the bracket 88 to the panel 60. Right angle portion 90 of the bracket 88 is secured to one side of a rearwardly positioned glass channel 92 of U-shape. The glass channel 92 is secured to the panel 24, as schematically shown at 94. That connection is located out of the plane of the cross section line 5-5 seen in Figure 1.

The glass channel 26 is secured to the panel 24 at the forward edge region of the side door inner structure, as shown schematically at 96 in Figure 6. Thus, the connector bracket 88 complements the stabilizing characteristic of the connector bracket 26 to provide a stable, robust connection between reinforcement member 60 and the inner door structure at both the forward edge region and the rear edge region of the side door assembly.

Figure 5 illustrates a reduction in the effective span between the mechanical connections of the reinforcement member for the construction of the present invention in comparison to a conventional span for a vehicle side door structure. The reduced span within the window projection of the inner structure of the present invention is substantially less than the conventional span, as indicated in Figure 5. This increases the stiffness of the door assembly and reduces the deflection of the reinforcement member 60 from the plane of the glass 86 when a force is applied to the reinforcement member, thereby making it much more difficult for an intruder to gain access to the vehicle interior.

The best span between the fasteners 56 and 72 is computed as follows:

$$\delta = Fl^3[X]EI,$$

where:-

$\delta$ = deflection that should be minimized;

F = force in a direction perpendicular to the plane of the window glass;

1 = the length of the span between the fasteners 56 and 72;

E = the modulus of elasticity of the reinforcement member; and

I = the second moment of inertia.

The term "X" is a load case factor for free end supports for a beam. The value for "X" is empirically determined depending upon how the beam is supported and the load is applied. It is obtained using a stimulated computer model using a free body loading of an end supported beam.

One feature of the invention is that a mechanical connection between each connector bracket and the belt reinforcement is in the form of a screw or a similar mechanical fastener, which may be released when there is a need for replacing an original equipment manufacturer's (OEM) outer panel and belt reinforcement subassembly. Access to this mechanical fastener is made by providing a tool access opening in each of the side door inner structural panels. Thus, the fastener can be applied and released using a suitable tool that may be inserted through the openings.

During assembly of the door structure, the side window glass, in the initial assembly steps, will not have been assembled in place. It is possible, therefore, to access the fastener with a suitable tool. The access will not be prevented by the window glass, which is assembled in the vehicle side door construction in a later step in the assembly process.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention.

**Claims**

1. A door assembly for an automotive vehicle, the door assembly comprising a door outer panel (10) extending from a forward edge portion of a vehicle door opening to a rearward vehicle door opening edge portion, a door inner structural panel assembly, a belt reinforcement member (60) between the outer panel (10) and the inner structural panel assembly extending from the forward edge portion to the rearward edge portion and first and second window glass supporting channels (22, 92) between the belt reinforcement member (60) and the door inner structural panel assembly, the first and second window glass supporting channels (22, 92) being fixed to the door inner structural panel assembly, **characterized by** a first connecting bracket (26) that mechanically connects the belt reinforcement member (60) to the inner structural panel assembly at a location within a glass projection area between the first and second window glass supporting channels (22, 92).

2. A door assembly as claimed in claim 1, wherein the first connecting bracket (26) mechanically connects the belt reinforcement member (60) to the inner structural panel assembly within a glass projection area in proximity to a forward edge of a window glass in the first and second window glass supporting channels (22, 92).

3. A door assembly as claimed in claim 1 or 2, wherein the first connecting bracket (26) includes a first portion secured to the belt reinforcement member (60) at a location within the projection area of a window glass and a second portion secured to the first window glass supporting channel (22) at a location forward of the first location.

4. A door assembly as claimed in claim 1 or 2, further comprising a second connecting bracket (88) mechanically connecting the belt reinforcement member (60) and the inner structural panel assembly within a window glass projection area in proximity to a rearward edge of a window glass in the glass supporting channel (92).

5. A door assembly as claimed in any of claims 1 to 4, wherein the door inner structural panel assembly comprises a first inner panel (46) and a second inner panel (24), the second inner panel (24) being disposed between the first inner panel (46) and the glass channels (22, 92) and at least one connecting bracket is mechanically connected to the second inner panel (24).

6. A door assembly as claimed in claim 5, wherein the first and second connecting brackets (26, 88) are both mechanically connected to the second inner panel (24).

7. A door assembly as claimed in claim 5 or 6, wherein the belt reinforcement member (60) is disposed between the second inner panel (24) and the door outer panel (10) such that the belt reinforcement member (60) and the outer panel (10) form a door outer structural panel assembly.

8. A door assembly as claimed in any of claims 1 to 7, wherein the mechanical connection of the belt reinforcement member (60) to the inner structural panel assembly includes a releasable fastener (56, 72) and the inner structural panel assembly includes at least one access opening (52, 54) to permit entry of a tool to attach and release the releasable fastener (56, 72).

9. A door assembly as claimed in any of claims 1 to 8, in which the door inner structural panel assembly comprises a first inner panel (46) and a second inner panel (24), the second inner panel (24) being disposed between the first inner panel (46) and the glass channels (22, 92), the first and second inner panels (46 and 24) of the inner structural panel assembly being secured together at respective forward and rearward panel margins, first and second connecting brackets (26, 88) are used to mechanically connect the belt reinforcement member (60) to the second inner panel and the belt reinforcement member (60) extends between the forward and rearward panel margins wherein a span between the forward and rearward margins is greater than a span between the mechanical connections (56, 72) between the belt reinforcement member (60) and the first and second connecting brackets (26, 88).

10. A door assembly as claimed in claim 9, wherein a functional relationship between the span between the mechanical connections (56, 72) and a deflection due to a force applied to the belt reinforcement member (60) is expressed as
$\delta = Fl^3 [X]EI$, where
$\delta$ = deflection to be minimized,
F = force,
l = length of span between mechanical connections,
E = modulus of elasticity,
I = $2^{nd}$ moment of inertia, and
X = load case factor.

## Patentansprüche

1. Eine Tür für ein Kraftfahrzeug, wobei sich die Tür aus einem Außenblech (10), das von einer Vorderkante einer Fahrzeugtüröffnung zu einer Hinterkante der Fahrzeugtüröffnung verläuft, einer inneren Türblechplatte, einer Gurtverstärkung (60) zwischen dem Außenblech (10) und der inneren Blechplatte , die von der Vorderkante zur Hinterkante verläuft, und erste und zweite Fensterglasstützprofile (22, 92) zwischen der Gurtverstärkung (60) und dem inneren Türblech aufweist, zusammensetzt, wobei das erste und zweite Fensterglasstützprofil (22, 92) am inneren Türblech befestigt ist,

   **gekennzeichnet durch** eine erste Verbindungsstrebe (26), welche die Gurtverstärkung (60) mit dem inneren Türblech an einer Stelle innerhalb eines Glasansatzes zwischen den ersten und zweiten Fensterglasstützprofilen (22, 92) mechanisch verbindet.

2. Eine Tür entsprechend Anspruch 1, wobei die erste Verbindungsstrebe (26) die Gurtverstärkung (60) mit dem inneren Türblech innerhalb eines Glasansatzes in Nähe einer Vorderkante eines Fensterglases in den ersten und zweiten Fensterglasstützprofilen (22, 92) mechanisch verbindet.

3. Eine Tür entsprechend Anspruch 1 oder 2, wobei die erste Verbindungsstrebe (26) einen ersten Abschnitt aufweist, der an der Gurtverstärkung (60) an einer Stelle innerhalb des Ansatzes eines Fensterglases abgesichert ist, und einen zweiten Abschnitt aufweist, der am ersten Fensterglasstützprofil (22) an einer Stelle vor der ersten Stelle abgesichert ist.

4. Eine Tür entsprechend Anspruch 1 oder 2, zu der weiterhin eine zweite Verbindungsstrebe (88) gehört, welche die Gurtverstärkung (60) und das innere Türblech innerhalb eines Glasfensteransatzes in Nähe der Hinterkante eines Fensterglases im Glasstützprofil (92) mechanisch verbindet.

5. Eine Tür entsprechend einem der Ansprüche 1 bis 4, wobei das innere Türblech ein erstes Innenblech (46) und ein zweites Innenblech (24), das zwischen dem ersten Innenblech (46) und den Glasprofilen (22, 92) positioniert ist, umfasst und zumindest eine Verbindungsstrebe mit dem zweiten Innenblech (24) mechanisch verbunden ist.

6. Eine Tür entsprechend Anspruch 5, wobei die erste und zweite Verbindungsstrebe (26, 88) beide mit dem zweiten Innenblech (24) mechanisch verbunden sind.

7. Eine Tür entsprechend Anspruch 5 oder 6., wobei die Gurtverstärkung (60) zwischen dem zweiten Innenblech (24) und dem Außenblech der Tür (10) positioniert ist, so dass die Gurtverstärkung (60) und das Außenblech (10) eine Außenblecheinheit der Tür bilden.

8. Eine Tür entsprechend einem der Ansprüche 1 bis 7, wobei die mechanische Verbindung der Gurtverstärkung (60) mit dem inneren Türblech ein lösbare Befestigungselement (56, 72) aufweist und das innere Türblech zumindest eine Zugangsöffnung (52, 54) aufweist, damit ein Werkzeug zum Anbringen und Lösen des lösbaren Befestigungselements (56, 72) eingeführt werden kann.

9. Eine Tür entsprechend einem der Ansprüche 1 bis 8, bei der das innere Türblech der Tür ein erstes Innenblech (46) und ein zweites Innenblech (24) aufweist, wobei sich das zweite Innenblech (24) zwischen dem ersten Innenblech (46) und den Glasprofilen (22, 92) befindet, wobei das erste und zweite Innenblech (46 und 24) des inneren Türblechs an jeweiligen vorderen und hinteren Blechkanten zusammen abgesichert sind, wobei erste und zweite Verbindungsstreben (26, 88) verwendet werden, um die Gurtverstärkung (60) mechanisch mit dem zweiten Innenblech zu verbinden, und die Gurtverstärkung (60) zwischen den vorderen und hinteren Blechkanten verläuft, wobei eine Spannweite zwischen der Vorder- und Hinterkante größer als eine Spannweite zwischen den mechanischen Verbindungen (56, 72) zwischen der Gurtverstärkung (60) und der ersten und zweiten Verbindungsstrebe (26, 88) ist.

10. Eine Tür entsprechend Anspruch 9, wobei die funktionale Beziehung zwischen der Spannweite zwischen den mechanischen Verbindungen (56, 72) und eine Durchbiegung infolge einer auf die Gurtverstärkung (60) angewandten Kraft wie folgt ausgedrückt wird:

    $\delta = Fl^3$ [X] EI , wobei
    $\delta$ = zu minimierende Durchbiegung
    F = Kraft
    L = Länge der Spannweite zwischen mechanischen Verbindungen
    E = Elastizitätsmodul
    I = 2. Trägheitsmoment und
    X = Lastfaktor

## Revendications

1. Un ensemble portière pour un véhicule automobile, l'ensemble portière comprenant un panneau de portière extérieur (10) s'étendant d'une partie de bordure avant d'une ouverture de portière de véhicule vers une partie de bordure d'ouverture de portière de véhicule arrière, un ensemble panneau de structure intérieur de portière, un élément de renfort de ceinture (60) entre le panneau extérieur (10) et l'ensemble panneau de structure intérieur s'étendant de la partie de bordure avant à la partie de bordure arrière et des premier et deuxième canaux de support de verre de vitre (22, 92) entre l'élément de renfort de ceinture (60) et l'ensemble panneau de structure intérieur de portière, les premier et deuxième canaux de support de verre de vitre (22, 92) étant fixés à l'ensemble panneau de structure intérieur de portière,

**caractérisé par** un premier étrier de raccordement (26) qui raccorde mécaniquement l'élément de renfort de ceinture (60) à l'ensemble panneau de structure intérieur à un emplacement à l'intérieur d'une zone de projection de verre entre les premier et deuxième canaux de support de verre de vitre (22, 92).

2. Un ensemble portière selon la Revendication 1, où le premier étrier de raccordement (26) raccorde mécaniquement l'élément de renfort de ceinture (60) à l'ensemble panneau de structure intérieur à l'intérieur d'une zone de projection de verre à proximité d'une bordure avant d'un verre de vitre dans les premier et deuxième canaux de support de verre de vitre (22, 92).

3. Un ensemble portière selon la Revendication 1 ou 2, où le premier étrier de raccordement (26) comprend une première partie fixée à l'élément de renfort de ceinture (60) à un emplacement à l'intérieur de la zone de projection d'un verre de vitre et une deuxième partie fixée au premier canal de support de verre de vitre (22) à un emplacement à l'avant du premier emplacement.

4. Un ensemble portière selon la Revendication 1 ou 2, comprenant en outre un deuxième étrier de raccordement (88) raccordant mécaniquement l'élément de renfort de ceinture (60) et l'ensemble panneau de structure intérieur à l'intérieur d'une zone de projection de verre de vitre à proximité d'une bordure arrière d'un verre de vitre dans le canal de support de verre (92).

5. Un ensemble portière selon l'une quelconque des Revendications 1 à 4, où l'ensemble panneau de structure intérieur de portière comprend un premier panneau intérieur (46) et un deuxième panneau intérieur (24), le deuxième panneau intérieur (24) étant disposé entre le premier panneau intérieur (46) et les canaux de verre (22,92), et au moins un étrier de raccordement est mécaniquement raccordé au deuxième panneau intérieur (24).

6. Un ensemble portière selon la Revendication 5, où les premier et deuxième étriers de raccordement (26, 88) sont tous les deux mécaniquement raccordés au deuxième panneau intérieur (24).

7. Un ensemble portière selon la Revendication 5 ou 6, où l'élément de renfort de ceinture (60) est disposé entre le deuxième panneau intérieur (24) et le panneau de portière extérieur (10) de sorte que l'élément de renfort de ceinture (60) et le panneau extérieur (10) forment un ensemble panneau de structure extérieur de portière.

8. Un ensemble portière selon l'une quelconque des Revendications 1 à 7, où le raccord mécanique de l'élément de renfort de ceinture (60) à l'ensemble panneau de structure intérieur comprend une fixation libérable (56, 72) et l'ensemble panneau de structure intérieur comprend au moins une ouverture d'accès (52, 54) destinée à permettre l'entrée d'un outil destiné à fixer et libérer la fixation libérable (56, 72).

9. Un ensemble portière selon l'une quelconque des Revendications 1 à 8, dans lequel l'ensemble panneau de structure intérieur de portière comprend un premier panneau intérieur (46) et un deuxième panneau intérieur (24), le deuxième panneau intérieur (24) étant disposé entre le premier panneau intérieur (46) et les canaux de verre (22, 92), les premier et deuxième panneaux intérieurs (46 et 24) de l'ensemble panneau de structure intérieur étant fixés ensemble à des marges de panneau avant et arrière respectives ; les premier et deuxième étriers de raccordement (26, 88) sont utilisés de façon à raccorder mécaniquement l'élément de renfort de ceinture (60) au deuxième panneau intérieur et l'élément de renfort de ceinture (60) s'étend entre les marges de panneau avant et arrière où un intervalle entre les marges avant et arrière est supérieur à un intervalle entre les raccords mécaniques (56, 72) entre l'élément de renfort de ceinture (60) et les premier et deuxième étriers de raccordement (26, 88).

10. Un ensemble portière selon la Revendication 9, où une relation fonctionnelle entre l'intervalle entre les raccords mécaniques (56, 72) et une déflection due à une force appliquée à l'élément de renfort de ceinture (60) est exprimée sous la forme

$\delta = Fl^3[X]EI$, où
$\delta$ = déflection à minimiser,
F = force,
I = longueur d'intervalle entre raccords mécaniques,
E = module d'élasticité,
I = 2ème moment d'inertie, et
X = facteur de charge.

*Fig. 1*

FRONT EDGE

REAR EDGE

FRONT EDGE

*Fig. 2*

36

34

30

32

FRONT EDGE

*Fig. 3*

34

30

44

*Fig. 4*

EP 1 790 513 B1

CONVENTIONAL
CONNECTION AREA

CONVENTIONAL
CONNECTION AREA

|← CONVENTIONAL SPAN FOR CONNECTIONS →|

|← REDUCED SPAN WITHIN WINDOW PROJECTION →|

26

92

82  56

10   60   86

72   88

*Fig. 5*

*Fig. 6*

32

46   30

52

62

48

24

22   96

54

84

86

68

64

56

60

26   58

10

*Fig. 7*

*Fig. 8*